# EUROPEAN PATENT APPLICATION

(11) **EP 2 333 377 A1**
(43) Date of publication of application: **15.06.2011**
(21) Application number: 10251933.7
(22) Date of filing: 15.11.2010
(51) Int. Cl.: F16H 25/20, F16C 29/06

(54) **Linear actuator with ball bearing spline**

(30) Priority: 14.12.2009 US 637120
(71) Applicant: Hamilton Sundstrand Corporation, Windsor Locks, CT 06096-1010 (US)
(72) Inventor: Himmelmann, Richard A., Beloit Wisconsin 53511 (US)
(74) Representative: Tomlinson, Kerry John

(57) **Abstract**

A linear actuator (100, 200) includes a ball screw (101, 205), the ball screw being configured to rotate; a nut (103, 204) engaged with the ball screw, the nut being configured to translate linearly in response to the rotation of the ball screw; and a ball bearing spline (102a) integrated into the nut, the ball bearing spline comprising a plurality of ball bearings (206), wherein the ball bearing spline is configured to react a torque from the rotation of the ball screw.

## Description

### FIELD OF INVENTION

The subject matter disclosed herein generally to the field of linear actuators.

### DESCRIPTION OF RELATED ART

A linear actuator is a machine designed to provide force and linear displacement to an object. A linear actuator may comprise an electromechanical actuator (EMA), wherein the actuator is powered by an electric motor. EMAs offer increased efficiency over hydraulic or pneumatic linear actuators while eliminating fire hazards and leakage problems associated with hydraulic fluids used in hydraulic actuation systems.

A linear actuator may comprise a ball screw actuator, in which an electric motor powers a rotating ball bearing screw, or ball screw. A ball screw actuator converts rotary motion from a rotating ball screw into linear motion by a translating nut via a spiral ball track. As the ball screw is rotated, the translating nut, which is engaged with the ball screw, is restrained from turning, and a set of ball bearings located between the screw and nut are forced to follow the spiral ball track, reducing friction between the ball screw and the nut. The nut is thereby translated in a linear direction by the rotation of the ball screw.

In order to restrain the translating nut from turning with the ball screw's rotation, a ball screw actuator requires that the torque associated with the rotating ball screw be reacted. The simplest way to react the driving torque is to utilize the structure associated with the actuator load. Ball screw actuators are typically used for applications in which the object being moved articulates on a structure that has a predetermined path; such a structure may be used to inhibit the rotation of the translating nut. However, in some applications, it may not be possible for the ball screw actuator to react the torque into the parent structure. In such an application, a torque reacting element, such as external torque reacting linkage or a torque reacting spline, may be incorporated into the actuator. In applications where the actuator may not incorporate an external torque reacting linkage (for example, due to packaging constraints), the torque reacting spline may be used. A torque reacting spline comprises a sliding interface located between the stationary and translating elements of the actuator, which accommodates the translating element's translation while reacting the torque from the rotating element. However, the sliding friction associated with a torque reacting spline's sliding interface absorbs energy from the system, reducing the actuator's overall efficiency. The torque reacting spline may also experience relatively high wear due to the sliding friction.

### BRIEF SUMMARY

According to one aspect of the invention, a linear actuator includes a ball screw, the ball screw configured to rotate; a nut engaged with the ball screw, the nut configured to translate linearly in response to the rotation of the ball screw; and a ball bearing spline integrated into the nut, the ball bearing spline comprising a plurality of ball bearings, wherein the ball bearing spline is configured to react a torque from the rotation of the ball screw.

According to another aspect of the invention, a ball bearing spline is integrated into a translating nut of a linear actuator, the ball bearing spline comprising a plurality of ball bearings, wherein the ball bearing spline is configured to react a torque from a rotation of a ball screw engaged with the translating nut.

Other aspects, features, and techniques of the invention will become more apparent from the following description taken in conjunction with the drawings.

### BRIEF DESCRIPTION OF THE SEVERAL VEWS OF THE DRAWINGS

Referring now to the drawings wherein like elements are numbered alike in the several FIGURES:

FIG. 1 illustrates an embodiment of a linear actuator comprising a ball bearing spline.

FIG. 2 illustrates a cross-section of an embodiment of a linear actuator comprising a ball bearing spline.

### DETAILED DESCRIPTION

Embodiments of a linear actuator comprising a ball bearing spline are provided, with exemplary embodiments being discussed below in detail.

A ball bearing spline may be incorporated into the translating element, or nut, of a linear ball screw actuator. The ball bearing spline comprises a linear race that holds a plurality of rolling elements, or ball bearings. The ball bearings act to transfer a load linearly across the interface between the stationary housing and the translating nut while reacting the ball screw torque with relatively low friction, thereby increasing the efficiency of the actuator. A bearing ball spline may comprise a ball return, allowing the ball bearings to recirculate in the race by forcing ball bearings that exit the ball bearing spline's load path back to the entrance to the load path, allowing the ball bearing spline to operate over an unlimited stroke.

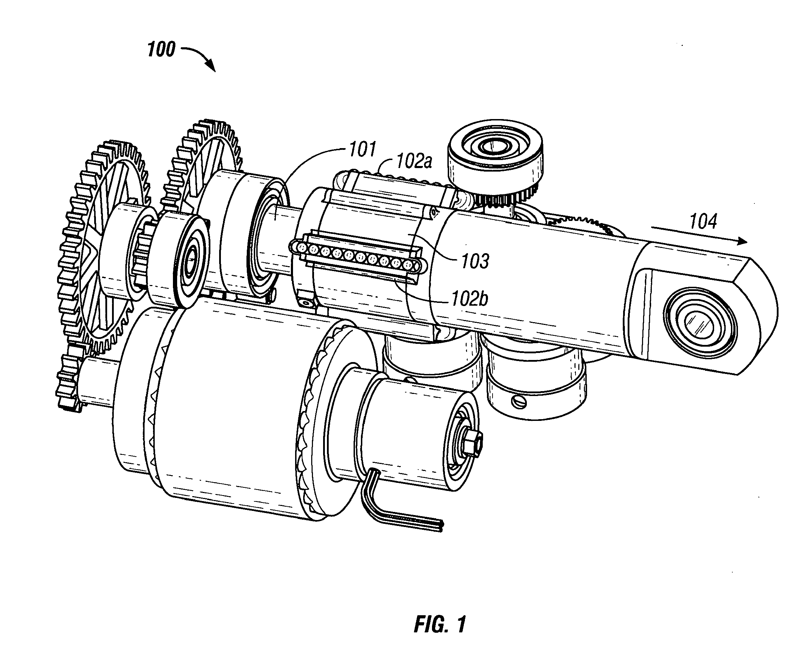

FIG. 1 illustrates an embodiment of a linear actuator 100 comprising a ball bearing spline. Linear actuator 100 comprises a rotating ball screw 101 engaged with a translating nut 103. Ball screw 101 may be powered by an electric motor in some embodiments. Ball bearing splines 102a and 102b are integrated into translating nut 103, and comprise a plurality of ball bearings. Ball bearing splines 102a and 102b react the torque associated with the rotation of the ball screw 101, forcing translating nut 103 to move in a linear direction indicated by arrow 104 in response to the rotation of ball screw 101. Ball bearing splines 102a and 102b are shown for illustrative purposes only; a linear actuator may comprise any appropriate number and configuration of ball bearing splines.

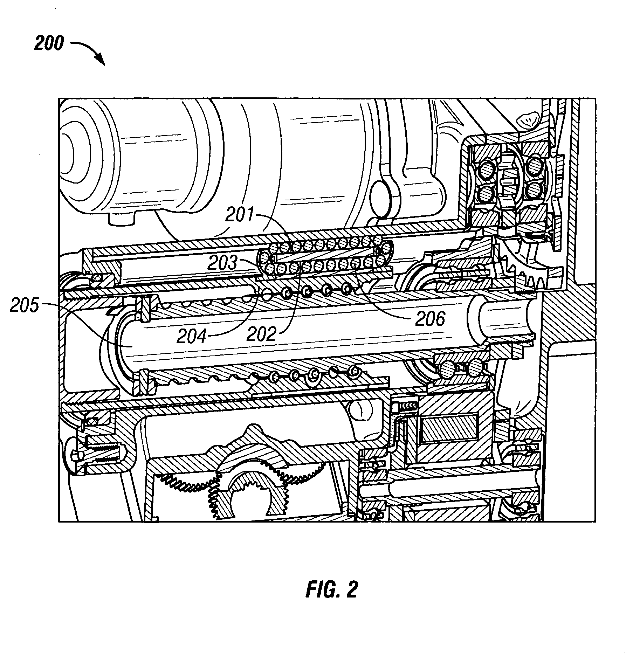

FIG. 2 illustrates a cross-section of an embodiment of a linear actuator 200 comprising a ball bearing spline. The linear actuator 200 comprises rotating ball screw 205 engaged with translating nut 204. Ball screw 205 may be powered by an electric motor in some embodiments. The ball bearing spline is integrated into translating nut 204, and comprises an outer race 201, an inner race, or load path, 202, a ball return path 203, and a plurality of rolling elements, or ball bearings, 206. In operation, as ball screw 205 rotates, the ball bearing spline forces translating nut 204 to move in a linear direction, reacting the torque from the rotation of ball screw 205. The plurality of rolling elements 206 circulate continuously through the inner race 202 to the outer race 201 via the ball return path 203, and then back into the inner race 202, allowing the ball bearing spline to operate over an unlimited linear stroke of translating nut 204.

The technical effects and benefits of exemplary embodiments include a linear actuator spline having increased efficiency and decreased wear.

The terminology used herein is for the purpose of describing particular embodiments only and is not intended to be limiting of the invention. While the description of the present invention has been presented for purposes of illustration and description, it is not intended to be exhaustive or limited to the invention in the form disclosed. Many modifications, variations, alterations, substitutions, or equivalent arrangement not hereto described will be apparent to those of ordinary skill in the art without departing from the scope of the invention as defined by the claims. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A linear actuator (100, 200) comprising:
a ball screw (101, 205), the ball screw (101, 205) being configured to rotate;
a nut (103, 204) engaged with the ball screw, the nut (103, 204) being configured to translate linearly in response to the rotation of the ball screw (101, 205); and
a ball bearing spline (102a) integrated into the nut (103, 204), the ball bearing spline (102a) comprising a plurality of ball bearings (206), wherein the ball bearing spline is configured to react a torque from the rotation of the ball screw (101, 205).

2. The linear actuator (100, 200) of claim 1, wherein the ball bearing spline (102a) comprises an inner race (202) and an outer race (201), the inner race (202) and the outer race (201) being connected by a ball return path (203).

3. The linear actuator (100, 200) of claim 2, wherein the plurality of ball bearings (206) circulate continuously from the inner race (202) to the outer race (201) and back to the inner race (202) via the ball return path (203).

4. The linear actuator (100, 200) of claim 1, 2 or 3, further comprising an electric motor configured to drive the rotation of the ball screw (101, 205).

5. The linear actuator (100, 200) of claim 1, 2, 3 or 4, wherein a plurality of ball bearing splines (102a, 102b) are integrated into the nut (103, 204).
